# EUROPEAN PATENT SPECIFICATION

(11) **EP 1 997 774 B1**
(45) Date of publication and mention of the grant of the patent: **24.06.2015**
(21) Application number: 08150906.9
(22) Date of filing: 31.01.2008
(51) Int. Cl.: C01B 3/08, C25B 11/03, C25B 1/04, C25B 9/00, C25B 11/04

(54) **Method for producing hydrogen by using different metals**
Verfahren zur Herstellung von Wasserstoff mit Hilfe verschiedener Metalle
Procédé pour la production d'hydrogène en utilisant différents métaux

(30) Priority: 24.05.2007 TW 96118619; 31.12.2007 US 3688
(43) Date of publication of application: 03.12.2008
(73) Proprietor: Liung Feng Industrial Co Ltd, Taipei Hsien (TW)
(72) Inventor: Wan, Jin-ten, Chang An E. Rd., Taipei (TW); Hsu, Tsang-lin, c/o Liung Feng Industrial Co., Ltd., Tu-Cheng Shih, Taipei Hsien (TW); Lin, Heng-I, c/o Liung Feng Industrial Co., Ltd., Tu-Cheng Shih, Taipei Hsien (TW)
(74) Representative: Adamson Jones

(56) References cited:
- WO-A-02/14214
- GB-A- 190 903 188
- US-A- 2 623 812
- US-A- 3 256 504
- US-A- 4 072 514
- US-A- 4 264 362
- US-A- 5 089 107
- US-A- 5 833 934
- US-A1- 2003 118 505

## Description

### BACKGROUND OF THE INVENTION

### 1. FIELD OF THE INVENTION

The present invention relates to a method for producing hydrogen, and particularly to a method for producing hydrogen by using magnesium alloy scrap and stainless steel through spontaneous chemical reaction and a reaction of electrochemistry caused without extra energy consumption.

### 2. RELATED ART

Hydrogen is a non-pollution resource, which can be adapted to fuel, Ni-MH battery, and energy for industrials, such as desulfuration materials for oil working, chemical industrial, metallurgy industrial, and semi-conductor industry. Besides, hydrogen reacted in fuel cells do not produce carbon dioxide, therefore, hydrogen is expected to be new resource of energy in the development of the fuel cells. It is no doubt that increasing research on hydrogen is inevitable in the near future. Thus the study of application of hydrogen is very important.

As is well known, there are many ways to produce hydrogen, such as steam reforming, partial oxidation, gasification, and producing by electrolyte solution; however, hydrogen produced by the preceding three ways will generate carbon dioxide as well, which is unnecessary and not benefit to our earth, especially that carbon dioxide is the main factor causing global warming. Unfortunately, the fourth way mentioned before requires a large electricity consumption during processes of hydrogen production, and which results in higher cost, not economic benefits.

Although aforementioned ways are not the ideal ways to produce hydrogen, there is one method of producing hydrogen that is by using metal scrap. For instance, recycle disused aluminum cans as material of hydrogen production, but it still has to wash away coating of the cans by chemical solution, which may result in wastewater pollution. US 4072514 describes a hydrogen production process in which a magnesium composite, formed by causing finely divided metals consisting of iron, zinc, chromium, aluminium and manganese to be attached to the surface of magnesium, is immersed in an aqueous material such as sea water.

### SUMMARY OF THE INVENTION

Accordingly, an object of the present invention is to provide an innovative method for producing hydrogen from reduction potential difference generated between two different metals through spontaneous chemical reaction without consuming extra energy and causing environmental pollution.

To achieve the above-mentioned objects, the method of the present invention is to provide a metal of lower reduction potential as an anode metal, said anode metal comprising magnesium alloy scrap, and a metal of higher reduction potential as a cathode metal, said cathode metal comprising stainless steel and said cathode metal being shaped as a plate, mesh, gill net or powder,
combining said anode metal and said cathode metal by smashing and extruding the anode metal, and then rolling the cathode metal to be tightly attached to the smashed anode metal, and
immersing said combined metals in an electrolyte,
whereby hydrogen and side-products are generated from a reaction of electrochemistry caused by reduction potential difference between the different metals.

According to the above-mentioned features, magnesium alloy is used as the anode metal, and stainless steel is used as the cathode metal.

Moreover, the electrolyte can be sodium chloride solution, normal saline, or KCl solution.

To combine the two different metals in such way can simplify processes and economize energy.

### BRIEF DESCRIPTION OF THE DRAWINGS

Fig. 1 is a flowchart depicting a method for producing hydrogen by using different metals of the present invention;
Figs. 2A and 2B are relation diagrams respectively illustrating relation between hydrogen generation rate and time, and relation between generated hydrogen volume and time;
Fig. 2C is a relation diagram illustrating relation between generated hydrogen volume and time with different methods of immersion;
Figs. 3A and 3B to Figs. 5A and 5B are schematic views of a second embodiment, which illustrate development of the different metals being immersed before and after (the second embodiment does not fall within the scope of the present invention);
Figs. 6A and 6B are schematic views of a third embodiment of the present invention (the third embodiment does not fall within the scope of the present invention);
Figs. 7A and 7B are conventional arts showing different metals combined and immersed; and

Photographs 1 to 5 show development of the different metals being smashed, extruded and immersed in an electrolyte after electrochemistry reaction.

### DESCRIPTION OF THE PREFERRED EMBODIMENTS

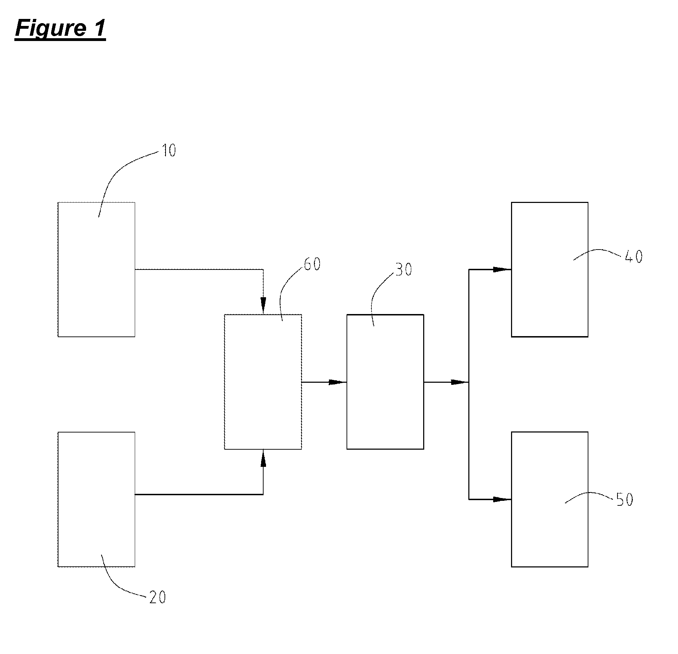

Illustrated in Fig. 1 is a flowchart of a method for producing hydrogen by using different metals of the present invention. The method includes: providing a metal of lower reduction potential as an anode metal 10 and a metal of higher reduction potential as a cathode metal 20, and combine the anode metal 10 and the cathode metal 20 by appropriate steps 60 (described below) and then immerse the combined metals 10, 20 in an electrolyte, whereby hydrogen 40 and side-products 50 generated from a reaction 30 of electrochemistry caused by reduction potential difference between the different metals 10, 20, wherein the anode metal 10 can be magnesium alloy scrap, and the cathode metal 20 can be stainless steel. In this preferred embodiment, the anode metal 10 is magnesium alloy scrap, and the cathode metal 20 is stainless steel AISI 304.

The anode metal 10 and the cathode metal 20 are combined with combining steps 60, which can be generally classified as to smash and extrude the anode metal 10 to a certain form and then the cathode metal 20 is rolled to attach on the anode metal 10, the cathode metal 20 shaped as a mesh, gill net, or powder (in the preferred embodiment, the cathode is mesh-like as shown in photographs 1 to 3).

Referring to photographs 1 to 3, the combining steps 60 are described as follows: first, smash a case of magnesium alloy scrap and extrude to a certain form, then roll a stainless steel mesh (AISI 304) to be tightly attached on the magnesium alloy scrap by stamping techniques, whereby the combining steps 60 is completed. Further referring to photographs 4 and 5, the combined two metals 10, 20 are immersed in normal saline, which is functioned as an electrolyte, and therefore cause a reaction of electrochemistry 30. Particularly, in this embodiment, an optimum value of a mutual potential difference between the anode and the cathode metals 10, 20 is within 0.71 V to 3.49V

If a calomel electrode (Hg₂Cl₂) is used to be the standard potential, the mutual potential difference between the anode and cathode metals is within 0.88V to 2.01V

Moreover, the anode and cathode metals immersed in normal saline causes the reaction of electrochemistry 30, wherein the normal saline is used as the electrolyte, which can be replaced by sodium chloride solution, or KCl solution, because potassium and chlorine ions thereof do not affect H⁺ and OH- in water. Accordingly, hydrogen 40 and side-products 50 such as hydroxide are generated from the reaction of electrochemistry 30, for which a reaction formula is as follows:

Mg + 2 H₂O→Mg(OH)₂ + H₂

It may be known from the above reaction formula that following the reaction, as well as obtaining the hydrogen gas to utilize, there may also be obtained the side-product of magnesium hydroxide, a heat-resisting product being a flame-resistant raw material.

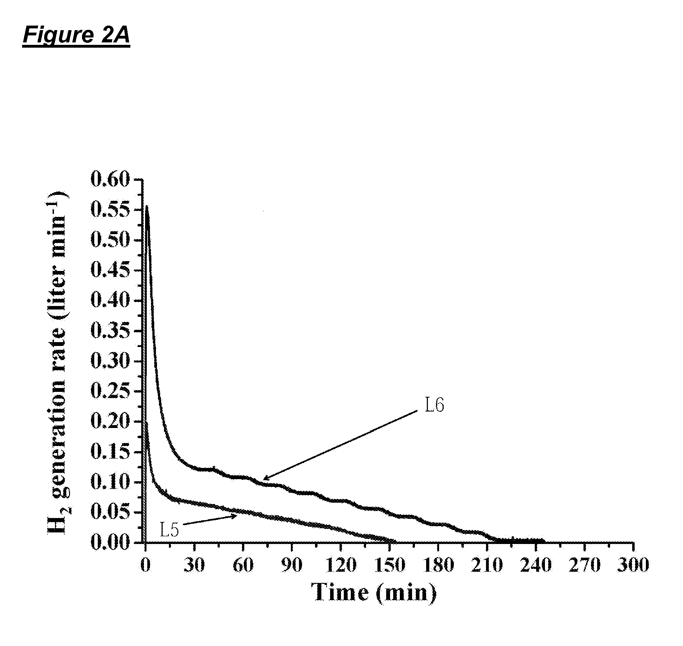

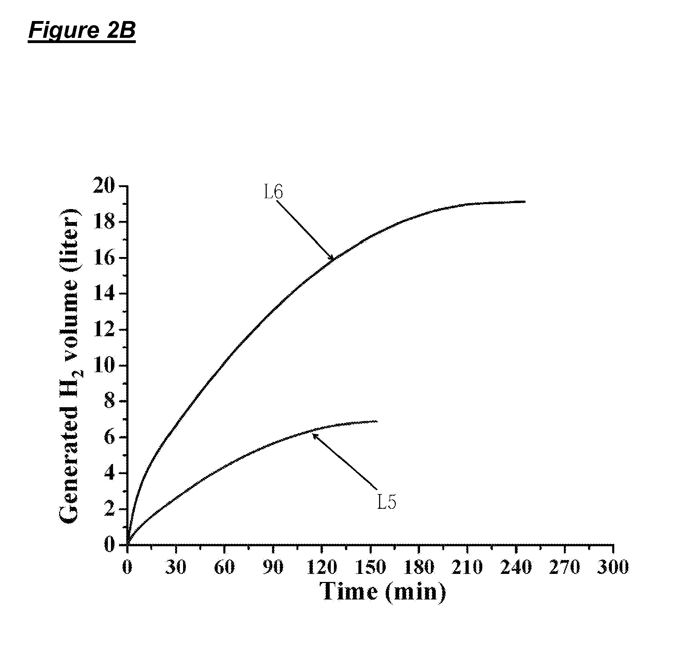

Figs. 2A and 2B are relation diagrams respectively illustrating relation between hydrogen generation rate and time, and relation between generated hydrogen volume and time. It is clearly from Figs. 2A and 2B that under same conditions (with 1500ml, 3.5 wt.% sodium chloride solution, magnesium alloy designated as an anode, stainless steel mesh (AISI 304) with size of 2 x 8 cm2 designated as a cathode), more pieces of the stainless steel mesh bring higher hydrogen generation rate and generated hydrogen volume. As shown in Figs. 2A and 2B, a reaction curve L5 representing one piece of the stainless steel mesh has lower performance than a reaction curve L6 representing four pieces of the stainless steel mesh.

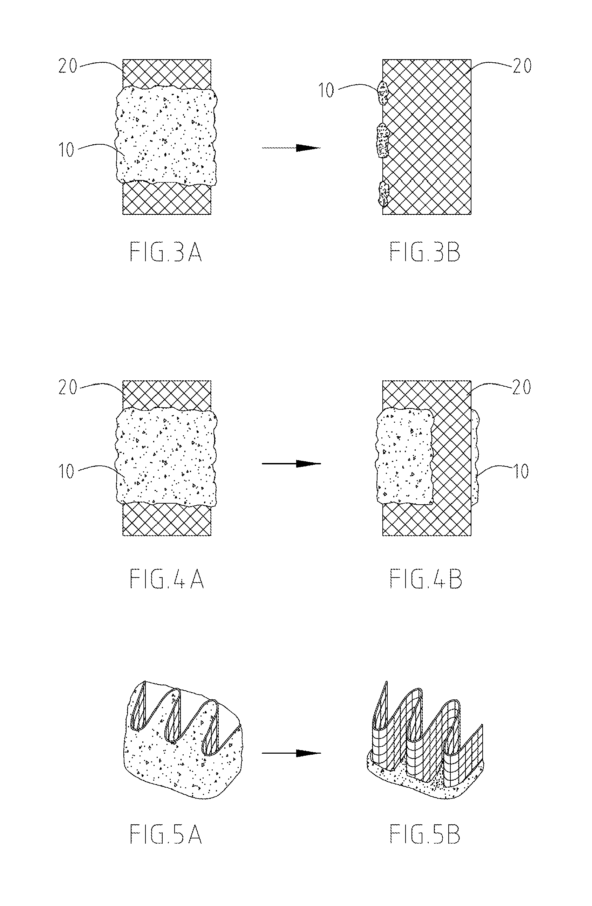

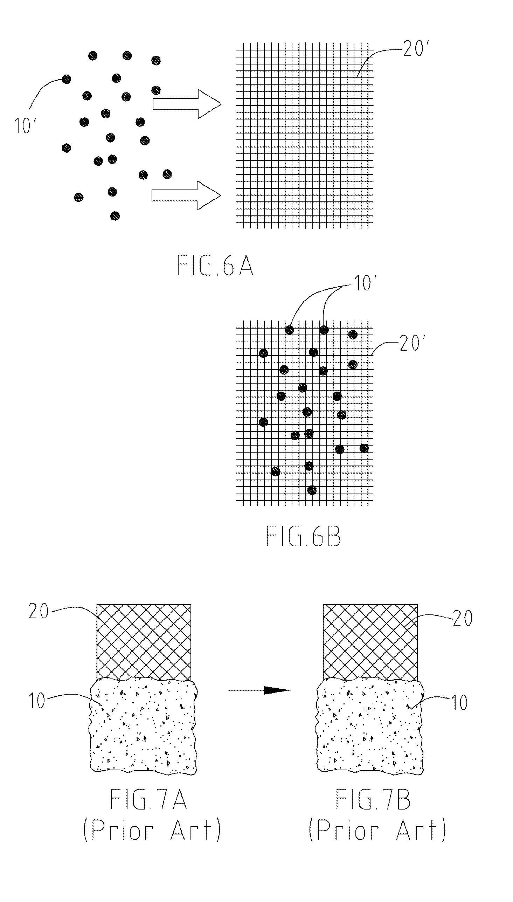

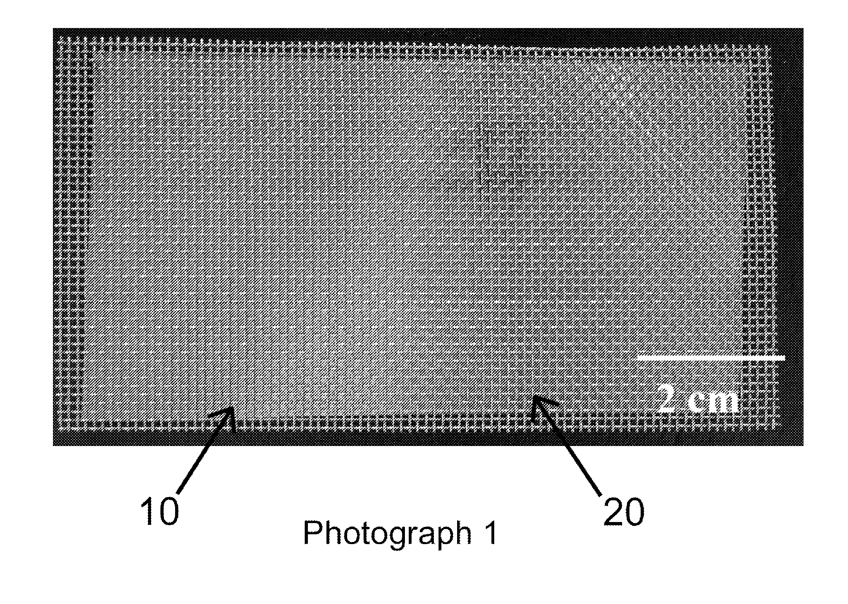

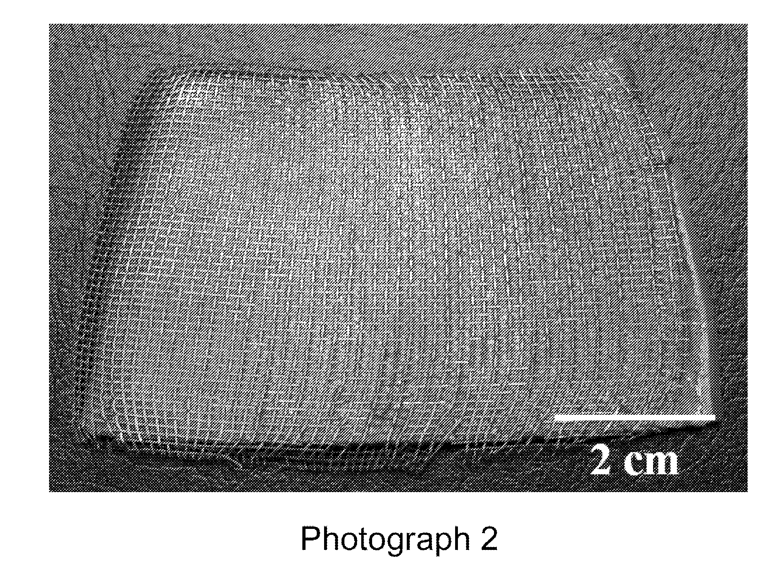

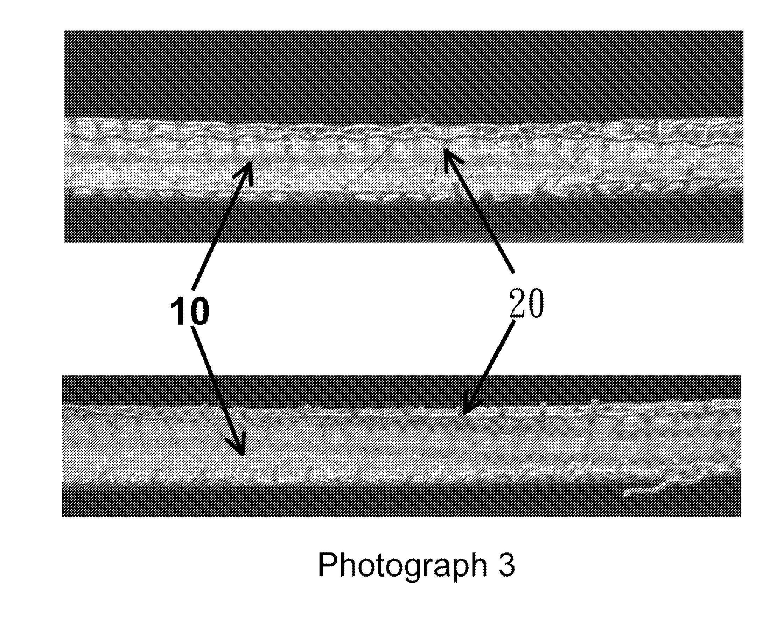

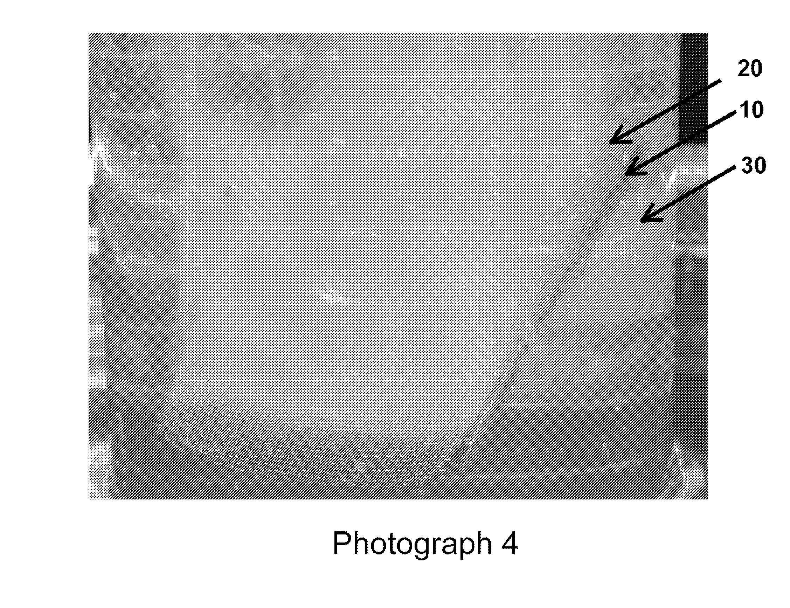

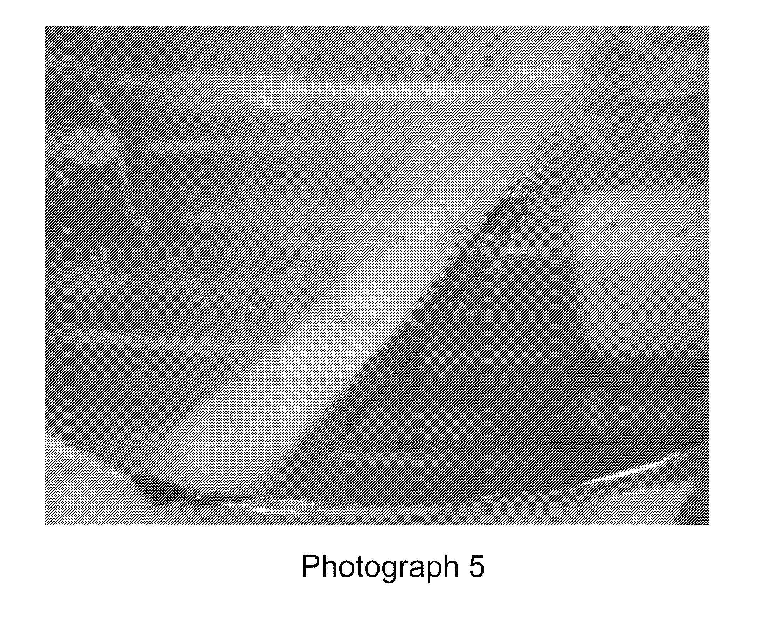

With reference to Figs. 3A and 3B to Figs. 5A and 5B for the second type of the combining steps 60 (this method of combining does not fall within the scope of the present invention), the anode metal 10 and the cathode metal 20 can be combined by melting the magnesium alloy scrap 10 (anode metal) to liquid status, then immerse one surface of the stainless steel mesh 20 (AISI 304, cathode metal) in the melting liquid metal 10 in order to shorten a path of electron transport between the anode and cathode metals during the reaction of electrochemistry and to increase hydrogen production, as shown in Fig. 3A, the stainless steel mesh 20 being immersed with one surface only. Furthermore, the stainless steel mesh 20 is immersed with only middle parts thereof in the liquid 10, two ends of the stainless steel mesh which are exposed out of the liquid 10. Still further, the stainless steel mesh 20 can be folded to multiple parts before immersing (as shown in Fig. 5A), and then immerse middle parts of the folded stainless steel mesh 20 through which to increase contact area with the melting liquid 10. In addition to one surface immersed, two surfaces of the stainless steel mesh 20 (cathode metal) can be immersed as well. Further referring to Figs. 3B to Figs. 7B, in comparison with conventional methods of immersion (as shown in Fig. 6A), the magnesium alloy scrap 10 remains lots of area not being reacted after the reaction of electrochemistry 30, however, in contrast, in the preferred embodiment of the present invention, there is only few parts of the magnesium alloy scrap 10 not being reacted, that is, the present invention has better efficiency of hydrogen generation than conventions. (Experimental conditions are the same in the comparative experiments, i.e. 1500ml, 3.5 wt.% sodium chloride solution, 10 pieces of stainless steel mesh (AISI 304) with size of 2 x 8 cm2 designated as a cathode).

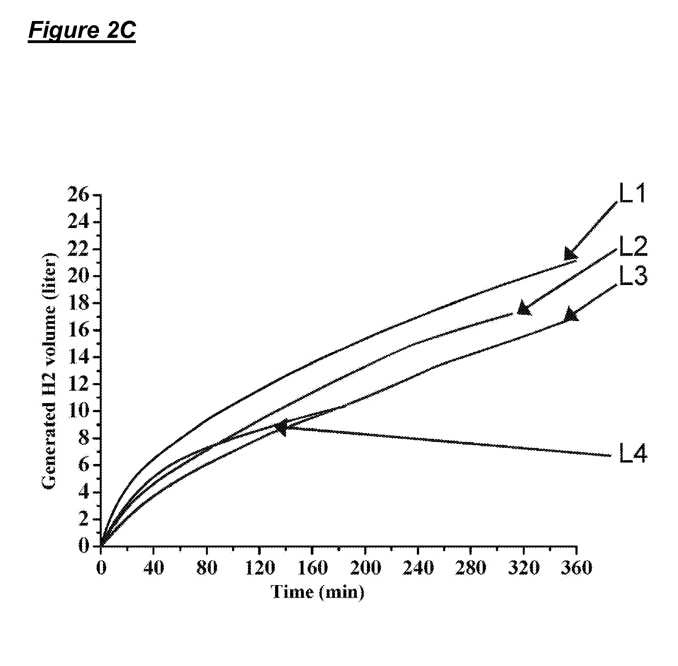

Further referring to Fig. 2C in combination with Figs. 7A and 7B, a relation diagram illustrating relation between generated H₂ volume and time, in which a reaction curve L1 (representing one surface immersed), L2 (multiple folds immersed), L3 (two surfaces immersed), and L4 (conventions) respectively shows different development in different conditions. It is clearly that after sixty minutes immersion, a reaction rate of the curve L4 becomes slow, while the curves L1, L2, L3 keep rising which prove that the present invention improve efficiency of hydrogen production.

The step of the union of two metals, besides using the above described methods of smashing and extrusion with rolling together or immersion in a liquid melt, also may be carried out by directly combining the two metals in the electrolyte with a continuous rolling action, which similarly may achieve the combination of the two metals so that the reduction potential difference between them causes an electrochemical reaction to yield the hydrogen gas and the side-products.

With reference to Figs. 6A and 6B, Figs. 6A and 6B are schematic views of a third embodiment (this embodiment does not fall within the scope of the present invention). In the third embodiment, the combining steps 60 is to utilize the electrolyte as an intermedium to make the smashed anode metal 10' and the mesh-like cathode metal 20' contact with each other and further cause a reaction of the of electrochemistry. As shown in Figs. 6A and 6B, the electrolyte drives the smashed anode metal 10' to contact the mesh-like cathode metal 20', or the mesh-like cathode metal 20' can be moved to contact the smashed anode metal 10' in the electrolyte.

Accordingly, the method of the present invention not only produces hydrogen by using magnesium alloy scrap but also produces side-product magnesium hydroxide and prevents environmental pollution.

## Claims

1. A method for producing hydrogen by using different metals, comprising:
providing a metal of lower reduction potential as an anode metal, said anode metal comprising magnesium alloy scrap, and a metal of higher reduction potential as a cathode metal, said cathode metal comprising stainless steel and said cathode metal being shaped as a plate, mesh, gill net, or powder;
combining said anode metal and said cathode metal by smashing and extruding the anode metal, and then rolling the cathode metal to be tightly attached to the smashed anode metal, and
immersing said combined metals in an electrolyte,
whereby hydrogen and side-products are generated from a reaction of electrochemistry caused by reduction potential difference between the different metals.

2. The method as claimed in Claim 1, wherein the cathode metal comprises stainless steel mesh.

3. The method as claimed in Claim 1 or Claim 2, wherein the electrolyte is sodium chloride solution, normal saline, or KCl solution, because potassium and chlorine ions thereof do not affect H⁺ and OH⁻ in water.

## Patentansprüche

1. Eine Methode zur Herstellung von Wasserstoff mithilfe von verschiedenen Metallen, bestehend aus:
Bereitstellung eines Metalls mit einem niedrigeren Reduktionspotential als ein Anodenmetall, wobei das genannte Anodenmetall aus Magnesiumlegierungsschrott besteht, und eines Metalls mit einem höheren Reduktionspotential als das Kathodenmetall, wobei das genannte Kathodenmetall aus Edelstahl besteht und das genannte Kathodenmetall in Form einer Platte, eines Gitters, eines Kiemennetzes oder in Form von Pulver vorliegt;
Verbindung des genannten Anodenmetalls und des genannten Kathodenmetalls durch Zertrümmern und Extrudieren des Anodenmetalls und durch anschließendes Walzen des Kathodenmetalls, damit dieses eng mit dem zertrümmerten Anodenmetall verbunden ist, und
Eintauchen der genannten verbundenen Metalle in ein Elektrolyt,
wobei Wasserstoff und Nebenprodukte aus der durch die Reduktion des potentiellen Unterschieds zwischen den verschiedenen Metallen ausgelösten elektrochemischen Reaktion entstehen.

2. Methode gemäß Anspruch 1, wobei das Kathodenmetall aus Edelstahlgitter besteht.

3. Methode gemäß Anspruch 1 oder Anspruch 2, wobei das Elektrolyt eine Natriumchloudlösung, eine herkömmliche Kochsalzlösung oder eine KCl-Lösung ist, da die daraus entstehenden Kalium- und Chlorionen keine Auswirkung auf H+ und OH- im Wasser haben.

## Revendications

1. Une méthode de production d'hydrogène en utilisant différents métaux, comprenant :
la fourniture d'un métal à potentiel de réduction inférieur en tant que métal anodique, ledit métal anodique comprenant de la ferraille de magnésium, et un métal à potentiel de réduction supérieur, en tant que métal cathodique, ledit métal cathodique comprenant de l'acier inoxydable, et étant façonné sous forme de plaque, de treillis, de filet maillant ou de poudre ;
la combinaison dudit métal anodique et dudit métal cathodique en brisant et en extrudant le métal anodique, puis en laminant le métal cathodique pour le fixer hermétiquement au métal anodique brisé, et
l'immersion desdits métaux alliés dans un électrolyte,
de l'hydrogène et des sous-produits étant ainsi produits par réaction électrochimique causée par une différence de potentiel de réduction entre les différents métaux.

2. La méthode selon la revendication 1, dans laquelle le métal cathodique comprend une maille en acier inoxydable.

3. La méthode selon la revendication 1 ou la revendication 2, dans laquelle l'électrolyte est une solution de chlorure de sodium, saline normale ou de KCl, parce que ses ions de potassium et de chlore n'affectent pas l'H+ et l'OH- dans l'eau.
